# EUROPEAN PATENT SPECIFICATION

(11) **EP 4 318 645 B1**
(45) Date of publication and mention of the grant of the patent: **29.07.2026**
(21) Application number: 23788440.8
(22) Date of filing: 10.01.2023
(51) Int. Cl.: H01M 4/131, H01M 4/525, H01M 4/505, H01M 4/58, H01M 10/052, H01M 4/02, H01M 4/133, H01M 50/103, H01M 4/136, H01M 4/36, H01M 10/42

(54) **LITHIUM SECONDARY BATTERY HAVING IMPROVED STABILITY**
LITHIUMSEKUNDÄRBATTERIE MIT VERBESSERTER STABILITÄT
BATTERIE RECHARGEABLE AU LITHIUM AYANT UNE STABILITÉ AMÉLIORÉE

(30) Priority: 13.04.2022 KR 20220045874
(43) Date of publication of application: 07.02.2024
(73) Proprietor: LG ENERGY SOLUTION, LTD., Seoul 07335 (KR)
(72) Inventor: KO, Young Jun, Daejeon 34122 (KR); SUNG, Joo Hwan, Daejeon 34122 (KR)
(74) Representative: Goddar, Heinz J.
(86) International application number: PCT/KR2023/000443
(87) International publication number: WO 2023/200083

(56) References cited:
- CN-A- 111 312 992
- JP-A- 2016 058 309
- JP-A- 2016 058 309
- JP-A- 2020 095 842
- KR-A- 20120 124 077
- KR-A- 20170 103 184
- KR-A- 20170 103 184
- KR-A- 20190 088 942
- US-B2- 10 243 196

## Description

### [Technical Field]

The present invention relates to a lithium secondary battery with improved safety due to internal short circuit.

### [Background Technology of the Invention]

Recently, secondary batteries have been widely applied not only to small devices such as portable electronic devices, but also to medium and large-sized devices such as battery packs or power storage devices of hybrid vehicles and electric vehicles.

Since high energy density is required to apply these secondary batteries to medium and large-sized devices, a ternary compound containing nickel (Ni), cobalt (Co), manganese (Mn), etc., specifically, LiNiₐCo_{b}Mn_{c}O₂ (0.6≤a≤0.9, a+b+c=1) with a nickel (Ni) content of 60% or more, lithium nickel metal oxides with a layered structure are used as a positive electrode active material to embody high capacity.

However, lithium nickel metal oxide increases in capacity as the content of nickel (Ni) increases, but exhibits low chemical and structural stability, so an exothermic reaction is likely to occur. The exothermic reaction of the positive electrode active material may be induced when a short circuit current flows inside the battery, that is, when an internal short circuit occurs. Among them, lithium nickel metal oxide has a low on-set point, so once the exothermic reaction begins, it rapidly rises the temperature inside the battery, causing ignition, so there is a problem of low safety.

Therefore, there is a demand for the development of a battery with safety issues due to internal short circuit have been improved while exhibiting high energy density.

### [Prior Art Documents]

### [Patent Document]

Korean Patent Publication No. 10-2020-0024980
Korean Patent Publication No. 10-2017-0004253
US 10 243 196 B2 relates to a positive electrode mixture layer (12) including a first layer (12a) that has a main surface (MS) and a second layer (12b) formed closer to the positive electrode current collector (11) side than the first layer (12a). A ratio of the volume of the first layer (12a) to the volume of the positive electrode mixture layer (12) is 20 to 75 vol%. The first layer (12a) contains lithium iron phosphate (LFP) (1) and lithium nickel cobalt manganese composite oxide (NCM) (2). A ratio of the mass of the LFP (1) to the total mass of the LFP (1) and the NCM (2) in the first layer (12a) is more than 0 and 80 mass% or less. The second layer (12b) contains NCM (2). A ratio of the mass of the LFP (1) to the total mass of the positive electrode active material in the positive electrode mixture layer (12) is 7.5 to 20 mass%. A maximum pore size of the first layer (12a) is 0.50 to 0.70 µm.
KR 2017 0103184A relates to a method for manufacturing a positive electrode for a lithium secondary battery and to a positive electrode for a lithium secondary battery manufactured by the method, and more specifically, to a method for manufacturing a positive electrode for a lithium secondary battery comprising a step of forming a two-layered electrode composite layer including positive electrode active materials having different particle sizes on an electrode plate, and to a positive electrode for a lithium secondary battery manufactured thereby.
JP 2016 058 309 A describes a nonaqueous electrolyte secondary battery including a positive electrode, a negative electrode, and a separator. The positive electrode includes a positive electrode current collector, a first positive electrode mixture layer that is provided on the positive electrode current collector, and a second positive electrode mixture layer that is provided on the first positive electrode mixture layer. The first positive electrode mixture layer includes a first positive electrode active material and a first conductive material. The second positive electrode mixture layer includes a second positive electrode active material and a second conductive material. The first positive electrode active material includes a lithium composite oxide having a layered crystal structure. The second positive electrode active material includes a lithium composite oxide having an olivine-type crystal structure. The second conductive material includes a conductive material having a higher crushing strength than the lithium composite oxide having an olivine-type crystal structure.

### [Description of the Invention]

### [Technical Problem]

Accordingly, the present invention is directed to provide a positive electrode having a high energy density by including a ternary compound containing nickel (Ni) and having safety issues due to internal short circuit have been improved, and a lithium secondary battery including the same.

### [Technical Solution]

To solve the above-mentioned problems,

In an exemplary embodiment, the present invention provides a positive electrode for a lithium secondary battery, the positive electrode comprising:
a positive electrode current collector; and
n (where n>2) positive electrode mixture layers disposed on the positive electrode current collector,
wherein a first positive electrode mixture layer contacting a surface of the positive electrode current collector contains a first positive electrode active material comprising a lithium composite metal oxide represented by Formula 1 below, and
wherein a second positive electrode mixture layer to an n^{th} positive electrode mixture layer disposed on the first positive electrode mixture layer contains the first positive electrode active material containing the lithium composite metal oxide represented by Formula 1 and a second positive electrode active material containing an iron phosphate compound including LiFePO₄, LiFe_{0.8}Mn_{0.2}PO₄ or LiFe_{0.5}Mn_{0.5}PO₄:

   [Formula 1] Liₓ[Ni_{y}Co_{z}Mn_{y}M¹ᵥ]O₂

In the above Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, where y+z+w+v=1,
wherein a concentration of the second positive electrode active material increases from the second positive electrode mixture layer to the n^{th} positive electrode mixture layer.

Here, a concentration of the second positive electrode active material in each positive electrode mixture layer increases as the position of the individual positive electrode mixture layer changes from the second positive electrode mixture layer to the n^{th} positive electrode mixture layer.

In addition, the second positive electrode active material may be included in an amount of less than 10wt% based on a total weight of the positive electrode mixture layer, and the second positive electrode active material may be included in each of the second to n^{th} positive electrode mixture layers in an amount of 0.5 to 20wt% based on the weight of each of the second to n^{th} positive electrode mixture layers.

Moreover, the second positive electrode active material may have an average particle size of 0.5µm to 5µm, and the average particle size may increase as the position of the individual positive electrode mixture layer changes from the second positive electrode mixture layer to the n^{th} positive electrode mixture layer.

In addition, a total thickness of the n positive electrode mixture layers may be 50µm to 200µm, and among them, a thickness of the first positive electrode mixture layer may be 10% to 60% of the total thickness of the n positive electrode mixture layers.

In addition, in an exemplary embodiment, the present invention provides an electrode assembly for a lithium secondary battery, the electrode assembly comprising: the above-described positive electrode according to the present invention; a negative electrode; and a separator interposed between the positive electrode and the negative electrode.

Here, the negative electrode may include a negative electrode mixture layer on a negative electrode current collector, and the negative electrode mixture layer may include one or more carbon-based negative electrode active materials among natural graphite, artificial graphite, expanded graphite, hard carbon, soft carbon, carbon fiber, carbon black, carbon nanotube, fullerene, activated carbon, acetylene black, and ketjen black.

Furthermore, in an exemplary embodiment, the present invention provides a lithium secondary battery, the lithium secondary battery comprising:
the above-described electrode assembly according to the present invention;
a battery case into which the electrode assembly is inserted; and
an electrolyte composition injected into a battery case together with an electrode assembly.

Here, the lithium secondary battery may be a prismatic secondary battery.

### [Advantageous Effects]

The positive electrode for a lithium secondary battery according to the present invention not only has an excellent energy density by including a ternary compound containing nickel (Ni), cobalt (Co), manganese (Mn), etc., but also has an advantage of improving safety due to internal short circuit of a secondary battery by containing an iron phosphate compound in the outermost part with respect to a positive electrode current collector.

### [Brief description of the drawings]

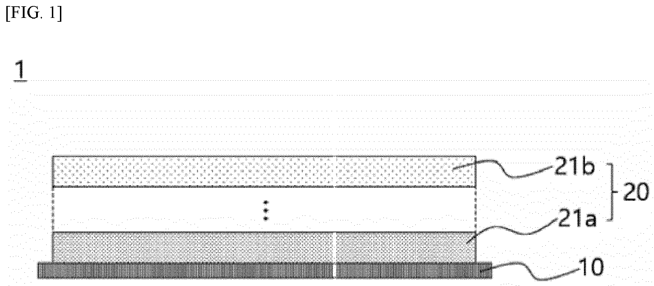

FIG. 1 is a cross-sectional view showing a structure of a positive electrode for a lithium secondary battery according to the present invention.

### [Best Mode for Carrying Out the invention]

The present invention can apply various modifications and have various embodiments. Specific exemplary embodiments will be exemplified in the diagrams and described in detail in the detailed description.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate, etc. is disposed "on" another part, this includes not only a case in which one part is disposed "directly on" another part, but a case in which a third part is interposed therebetween. In contrast, when a part of a layer, a film, a region or a plate, etc. is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

Hereinafter, the present invention will be described in more detail.

### Positive electrode for lithium secondary battery

The present invention provides a positive electrode for a lithium secondary battery, the positive electrode comprising:
a positive electrode current collector; and
n (where n>2) positive electrode mixture layers disposed on a positive electrode current collector,
wherein a first positive electrode mixture layer contacting the surface of the positive electrode current collector contains a first positive electrode active material comprising a lithium composite metal oxide represented by Formula 1 below, and
wherein the second positive electrode mixture layer to the n^{th} positive electrode mixture layer disposed on the first positive electrode mixture layer contains a first positive electrode active material containing a lithium composite metal oxide represented by Formula 1 and a second positive electrode active material containing an iron phosphate compound including LiFePO₄, LiFe_{0.8}Mn_{0.2}PO₄ or LiFe_{0.5}Mn_{0.5}PO₄:

   [Formula 1] Liₓ[Ni_{y}Co_{z}Mn_{y}M¹ᵥ]O₂

In the above Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, wherey+z+w+v=1,
wherein a concentration of the second positive electrode active material increases from the second positive electrode mixture layer to the n^{th} positive electrode mixture layer.

The positive electrode for a lithium secondary battery according to the present invention includes a positive electrode current collector and a multilayer positive electrode mixture layer in which two or more individual mixture layers are stacked on the positive electrode current collector.

Specifically, as shown in FIG. 1, the positive electrode mixture layer has a structure in which n (where n>2) individual positive electrode mixture layers are stacked on the positive electrode current collector. Here, the positive electrode mixture layer 20 stacked on the surface contacting the positive electrode current collector 10 is a first positive electrode mixture layer 21a, and the second positive electrode mixture layer to the n^{th} positive electrode mixture layer 21b are sequentially stacked on the first positive electrode mixture layer 21a, so that n individual positive electrode mixture layers are positioned on the positive electrode current collector.

The number of positive electrode mixture layers is not particularly limited as long as the positive electrode mixture layer has a structure of more than two layers, but specifically, it may be 3 to 10 layers; 3 to 8 layers; 3 to 6 layers; or 3 to 4 layers. By controlling the number of layers of the positive electrode mixture layer within the above range, the present invention may increase the energy density of the electrode while preventing a decrease in the manufacturing efficiency of the positive electrode, and at the same time, heat generated during charging and discharging of the battery can be effectively released to the outside.

In addition, the positive electrode mixture layer is prepared by applying, drying, and pressurizing a slurry containing a positive electrode active material capable of reversible intercalation and deintercalation of lithium ions during charging and discharging of a battery, and different types of the positive electrode active material may be included in each layer.

Specifically, the positive electrode according to the present invention includes a first positive electrode active material including a lithium composite metal oxide represented by Formula 1 in a positive electrode mixture layer, and has a configuration that further includes a second positive electrode active material containing an iron phosphate compound including LiFePO₄, LiFe_{0.8}Mn_{0.2}PO₄ or LiFe_{0.5}Mn_{0.5}PO₄ in the second positive electrode mixture layer to the n^{th} positive electrode mixture layer disposed on the positive electrode mixture layer spaced apart from the positive electrode current collector, that is, the first positive electrode mixture layer:

[Formula 1] Liₓ[Ni_{y}Co_{z}Mn_{y}M¹ᵥ]O₂

In the above Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, wherey+z+w+v=1,
wherein a concentration of the second positive electrode active material increases from the second positive electrode mixture layer to the n^{th} positive electrode mixture layer.

Lithium composite metal oxide represented by Formula 1 is a ternary lithium oxide containing nickel (Ni), cobalt (Co), and manganese (Mn) as main components, and has high energy density, so it is suitable for transportation fields such as Electric Vehicles (EVs) or for medium and large-sized secondary batteries for power storage such as Energy Storage Systems (ESS). However, although the lithium composite metal oxide increases in capacity as the nickel (Ni) content increases, it exhibits low chemical and structural stability, so an exothermic reaction is likely to occur, and accordingly, there is a problem in which ignition is highly likely to occur.

The exothermic reaction can be induced when a short circuit current flows inside the battery, that is, when an internal short circuit occurs. In general, a short circuit current of a battery may cause short circuit inside the secondary battery due to penetration of needle-shaped object or the like, or a short circuit may occur in an electronic device connected to the secondary battery.

Accordingly, by including a lithium composite metal oxide represented by Formula 1 throughout the multi-layered positive electrode mixture layer as the first positive electrode active material, and by further including an iron phosphate compound including LiFePO₄, LiFe_{0.8}Mn_{0.2}PO₄ or LiFe_{0.5}Mn_{0.5}PO₄ in the second positive electrode mixture layer to the n^{th} positive electrode mixture layer spaced apart from the positive electrode current collector as a second positive electrode active material, it can distribute the first positive electrode active material, which generates heat during charging and discharging of the battery, in a position adjacent to the positive electrode current collector, which is easy to transfer heat to the outside, improving the heat resistance of the positive electrode, as well as increase the rigidity of the positive electrode surface by the second positive electrode active material, so it is possible to reduce the risk of internal short circuit due to an external force or a penetration of a needle-shaped object.

Here, the first positive electrode active material containing the lithium composite metal oxide represented by Formula 1 is a metal oxide containing nickel (Ni), cobalt (Co), and manganese (Mn) together with lithium, and in some cases, may have a form doped with another transition metal (M¹). In a specific example, more specifically, the lithium composite metal oxide may include one or more selected from the group consisting of Li(Ni_{0.6}Co_{0.2}Mn_{0.2})O₂, Li(Ni_{0.7}Co_{0.15}Mn_{0.15})O₂, Li(Ni_{0.8}Co_{0.1}Mn_{0.1})O₂, Li(Ni_{0.9}Co_{0.05}Mn_{0.05})O₂, Li(Ni_{0.6}Co_{0.2}Mn_{0.1}Zr_{0.1})O₂, Li(Ni_{0.6}Co_{0.2}Mn_{0.15}Zr_{0.05})O₂, and Li(Ni_{0.7}Co_{0.1}Mn_{0.1}Zr_{0.1})O₂.

The particle size of the first positive electrode active material is not particularly limited, but may specifically have an average particle size of 0.5 to 5µm, more specifically 0.8 to 1.5µm; 1.0 to 3.0µm; 1.2 to 1.8µm; or it may have an average particle size of 1.5 to 2.5µm.

In addition, the iron phosphate compound is a lithium phosphate containing iron, and in some cases, may have a form doped with another transition metal (M²). The iron phosphate compound includes LiFePO₄, LiFe_{0.8}Mn_{0.2}PO₄, or LiFe_{0.5}Mn_{0.5}PO₄.

The second positive electrode active material may have an average particle size of 0.5 to 5µm, specifically 0.5 to 1. 0µm; 0.8 to 1.2µm; 1.0 to 2.0µm; 1.5 to 3.0µm; 2.0 to 3.0µm; or it may have an average particle size of 2.5 to 4.0µm.

Moreover, the average particle size of the second positive electrode active material included in each positive electrode mixture layer may tend to increase as the position of the individual positive electrode mixture layer changes from the second positive electrode mixture layer to the n^{th} positive electrode mixture layer.

Specifically, the second positive electrode active material included in the second positive electrode mixture layer may have an average particle size of 0.5 to 1.2µm, and the second positive electrode active material included in the n^{th} positive electrode mixture layer (wheren≥2) may have an average particle size of 1.3 to 3.0µm.

As an example, the second positive electrode active material included in the second positive electrode mixture layer may have an average particle size of 0.8 to 1.0µm, and the second positive electrode active material included in the third positive electrode mixture layer may have an average particle size of 1.2 to 1.5µm.

As another example, the second positive electrode active material included in the second positive electrode mixture layer may have an average particle size of 0.6 to 0.8µm, the second positive electrode active material included in the third positive electrode mixture layer may have an average particle size of 1.5 to 1.8µm, and the second positive electrode active material included in the fourth positive electrode mixture layer may have an average particle size of 2.0 to 2.2µm.

By letting the average particle size of the second positive electrode active material increase as the position of the individual positive electrode mixture layers changes from the second positive electrode mixture layer to the n^{th} positive electrode mixture layer, the positive electrode of the present invention can further increase the rigidity of the positive electrode surface.

In addition, the second positive electrode active material may be included in an amount of less than 10wt% based on the total weight of the positive electrode mixture layer, specifically may be included in an amount of 0.1 to 9.9wt% based on the total weight of the positive electrode mixture layer; 0.5 to 8.0wt%; 0.5 to 6.0wt%; 0.1 to 5.0wt%; 0.1 to 3.0wt%; 1.0 to 3.0wt%; 2.5 to 5.0wt%; 4.0 to 8.0wt%; or 6.0 to 9.9wt%.

Moreover, the second positive electrode active material may be included in each positive electrode mixture layer in an amount of 0.5 to 20wt% based on the weight of each positive electrode mixture layer, and specifically may be included in an amount of 1 to 18wt% based on the weight of each positive electrode mixture layer; 1 to 15wt%; 1 to 12wt%; 1 to 10wt%; 1 to 8wt%; 1 to 5wt%; 0.5 to 1wt%; 0.5 to 5wt%; 2 to 6wt%; 0.5 to 0.9wt%; 5 to 16wt%; 7 to 15wt%; or 8 to 12wt%.

By controlling the content of the second positive electrode active material within the above range with respect to the weight of the entire positive electrode mixture layer and individual positive electrode mixture layers, the present invention can prevent insufficient implementation of rigidity on the positive electrode surface due to an insignificant content, while preventing deterioration in electrical performance of the battery due to an increase in electrode resistance on the positive electrode surface by an excessive amount of the second positive electrode active material.

Furthermore, the second positive electrode active material is included in the second positive electrode mixture layer to the n^{th} positive electrode mixture layer, and has, a tendency to increase in concentration as the position changes from the second positive electrode mixture layer in contact with the first positive electrode mixture layer to the n^{th} positive electrode mixture layer most spaced apart from the first positive electrode mixture layer. Here, 'concentration increases' may mean that the content or the content ratio of the second positive electrode active material increases based on the total weight of the individual positive electrode mixture layer. The second positive electrode active material undergoes oxidation-reduction reactions more slowly than the first positive electrode active material when the battery overheats, or short circuit occurs. By increasing the concentration closer to the outermost surface of the positive electrode mixture layer, the possibility of fire or explosion during an internal short circuit of the battery is reduced.

Meanwhile, the positive electrode for a lithium secondary battery according to the present invention may further include a conductor, a binder, and other additives in the positive electrode mixture layer, if necessary.

In this case, the first and second positive electrode active materials contained in each positive electrode mixture layer may be included in an amount of 85 parts by weight or more, specifically, 90 parts by weight or more, 93 parts by weight or more, or 95 parts by weight or more based on the weight of each positive electrode mixture layer.

In addition, the conductor is used to improve the electrical performance of the positive electrode, and those commonly used in the art can be applied, but specifically, may include one or more selected from the group consisting of natural graphite, artificial graphite, carbon black, acetylene black, and Denka black, ketjenblack, Super-P, channel black, furnace black, lamp black, thermal black, graphene, and carbon nanotube.

Moreover, the conductor may be included in an amount of 0.1 to 5 parts by weight based on the weight of each positive electrode mixture layer, specifically may be included in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder serves to bind the positive electrode active material, the positive electrode additive, and the conductor to each other, and any binder having such a function may be used without particular limitation. Specifically, the binder may include one or more resins selected from the group consisting of polyvinylidene fluoride-hexafluoropropylene copolymer (PVdF-co-HFP);polyvinylidenefluoride (PVdF), polyacrylonitrile, polymethylmethacrylate, and copolymers thereof. As one example, the binder may include polyvinylidenefluoride.

Moreover, the binder may be included in an amount of 1 to 10 parts by weight based on the weight of each positive electrode mixture layer, specifically 2 to 8 parts by weight; or may include 1 to 5 parts by weight of the conductor.

In addition, the total thickness of the positive electrode mixture layer is not particularly limited, but may be specifically 50µm to 300µm, more specifically 100µm to 200µm; 80µm to 150µm; 120µm to 170µm; 150µm to 300µm; 200µm to 300µm; or 150µm to 190µm.

Also, among the individual positive electrode mixture layers constituting the positive electrode mixture layer, the thickness of the first positive electrode mixture layer contacting the positive electrode current collector may be adjusted within a certain range. Specifically, the thickness of the first positive electrode mixture layer may be 10% to 60% of the total thickness of the positive electrode mixture layer, and more specifically, 10% to 40% of the total thickness of the positive electrode mixture layer; 30% to 50%; 10% to 20%; or 40% to 60%.

In the present invention, by adjusting the total thickness and individual thickness of the positive electrode mixture layer within the above range, it is not only possible to prevent the energy density of the electrode from being reduced, but also to display high adhesive force between the positive electrode current collector and the positive electrode mixture layer.

Furthermore, the positive electrode current collector provided in the positive electrode may be one having high conductivity without causing chemical change in the battery. For example, stainless steel, aluminum, nickel, titanium, calcined carbon, etc. may be used, and in the case of aluminum or stainless steel, ones that are surface-treated with carbon, nickel, titanium, silver, or the like may also be used.

In addition, the average thickness of the current collector may be appropriately adjusted in the range of 5 to 500µm in consideration of the conductivity and total thickness of the positive electrode to be manufactured.

### Electrode assembly for lithium secondary battery

In addition, in an exemplary embodiment, the present invention provides an electrode assembly for a lithium secondary battery, the electrode assembly comprising:
the above-described positive electrode according to the present invention;
a negative electrode; and
a separator interposed between the positive electrode and the negative electrode.

The electrode assembly for a lithium secondary battery according to the present invention has an excellent output performance by including the above-described positive electrode of the present invention, and since it can distribute the first positive electrode active material in which heat is generated during charging and discharging of the battery to a position adjacent to the positive electrode current collector that is easy to transfer heat to the outside, the heat resistance of the positive electrode is improved, and the rigidity of the positive electrode surface can be increased by the second positive electrode active material, so there is an advantage of reducing the risk of internal short circuit due to an external force or a penetration of a needle-shaped object.

Here, since the positive electrode has the same configuration as the above-described positive electrode for a lithium secondary battery of the present invention, a description of the detailed configuration will be omitted.

In addition, the negative electrode includes a negative electrode mixture layer prepared by applying, drying, and pressurizing a negative electrode active material on a negative electrode current collector in the same manner as the positive electrode, and if necessary, may further include a conductor, a binder, other electrolyte additives, and the like.

Here, the negative electrode active material may be one commonly used in the art, but specifically, it may include one or more carbon-based negative electrode active materials among natural graphite, artificial graphite, expanded graphite, hard carbon, soft carbon, carbon fiber, carbon black, carbon nanotube, fullerene, activated carbon, acetylene black, and ketjen black.

Moreover, while the negative electrode mixture layer displays an adhesive force with the negative electrode current collector, it may include a binder so that the negative electrode active material, the conductor, other additives, and the like may bind to each other. Such binders include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC),starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro-rubber, or various copolymers thereof, and the like, and one alone or a mixture of two or more of these may be used. The binder may be included in an amount of 1 to 10 parts by weight based on the weight of the negative electrode mixture layer, specifically 2 to 8 parts by weight; or may include 1 to 5 parts by weight of the conductor.

In addition, the negative electrode mixture layer may have an average thickness of 100µm to 200µm, specifically may have an average thickness of 100µm to 180µm, 100µm to 150µm, 120µm to 200µm, 140µm to 200µm, or 140µm to 160µm.

Furthermore, the negative electrode may include a negative electrode current collector that has conductivity without causing chemical change in the battery. For example, as the negative electrode current collector, copper, stainless steel, aluminum, nickel, titanium, baked carbon, etc. may be used, and in the case of copper or stainless steel, ones that are surface-treated with carbon, nickel, titanium, silver, etc. may be used. In addition, the negative electrode current collector, same as the positive electrode current collector, may form micro/nano-scaled unevenness on the surface to increase the binding force to the negative electrode active material, and it may be used in various forms such as films, sheets, foils, nets, porous materials, foams, non-woven fabrics, etc. Moreover, the average thickness of the negative electrode current collector may be appropriately applied in the range of 3 to 500µm in consideration of the conductivity and total thickness of the negative electrode to be manufactured.

Furthermore, the separator is interposed between the positive electrode and the negative electrode, and an insulating thin film having a high ion permeability and mechanical strength is used. The separator is not particularly limited as long as it is commonly used in the art, but specifically, a chemically resistant and hydrophobic polypropylene; glass fiber; or a sheet or a non-woven fabric made of polyethylene, etc. may be used. In some cases, a composite separator in which inorganic particles/organic particles are coated with an organic binder polymer on a porous polymer substrate such as a sheet or a non-woven fabric may be used. When a solid electrolyte such as a polymer is used as the electrolyte, the solid electrolyte may serve as a separator. Moreover, the separator may have an average pore diameter of 0.01 to 10µm and an average thickness of 5 to 300µm.

### Lithium secondary battery

Furthermore, in an exemplary embodiment, the present invention provides a lithium secondary battery, the lithium secondary battery comprising:
the above-described electrode assembly according to the present invention;
a battery case into which the electrode assembly is inserted; and
an electrolyte composition injected into a battery case together with an electrode assembly.

The lithium secondary battery according to the present invention includes an electrode assembly including the above-described positive electrode of the present invention, and the electrode assembly may have a structure in which it is inserted into a battery case together with an electrolyte composition.

Here, since the electrode assembly has the same configuration as the above-described electrode assembly of the present invention, description of the detailed configuration will be omitted.

In addition, the electrolyte composition may include an organic liquid electrolyte, an inorganic liquid electrolyte, a solid polymer electrolyte, a gel polymer electrolyte, a solid inorganic electrolyte, a molten inorganic electrolyte, etc. that can be used during manufacture of a lithium secondary battery, but is not limited thereto.

Specifically, the electrolyte may include an organic solvent and a lithium salt.

The organic solvent may be used without particular limitation as long as it can serve as a medium through which ions involved in the electrochemical reaction of the battery can move. For example, as the organic solvent, ester-based solvents such as methyl acetate, ethyl acetate, γ-butyrolactone, ε-caprolactone, etc.; ether-based solvents such as dibutyl ether or tetrahydrofuran; ketone-based solvents such as cyclohexanone; aromatic hydrocarbon-based solvents such as benzene, fluorobenzene, etc.;carbonate-based solvents such as dimethylcarbonate (DMC), diethylcarbonate(DEC), methylethylcarbonate (MEC), ethylmethylcarbonate (EMC), ethylenecarbonate (EC), propylenecarbonate (PC), nitriles such as R-CN (R is a linear, a branched, or a cyclic hydrocarbon group of C2 to C20, and may include a double bond aromatic ring or an ether bond); amides such as dimethylformamide, etc.; dioxolanes such as 1,3-dioxolane; or sulfolanes, etc. may be used. Among the above, carbonate-based solvents are preferred, and a mixture of cyclic carbonates (e.g., ethylene carbonate or propylene carbonate, etc.) having a high ionic conductivity and a high dielectric constant capable of increasing the charging/discharging performance of the battery, and low-viscosity linear carbonate-based compounds (e.g., ethylmethyl carbonate, dimethyl carbonate, or diethyl carbonate, etc.) are more preferable. In this case, when the cyclic carbonate and the chain carbonate are mixed and used in a volume ratio of about 1:1 to 9, the performance of the electrolyte may be excellent.

In addition, the lithium salt may be used without particular limitation as long as it is a compound capable of providing lithium ions used in the lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂, etc. may be used.

Moreover, the concentration of the lithium salt may be used within the range of 0.1M to 2.0M. When the concentration of the lithium salt is within the above range, the electrolyte has appropriate conductivity and viscosity, so an excellent electrolyte performance can be exhibited, and lithium ions can move effectively.

In the electrolyte, besides the above electrolyte components, for the purpose of improving the lifespan characteristics of the battery, suppressing the decrease in battery capacity, and improving the discharge capacity of the battery, for example, one or more additives such as pyridine, triethyl phosphite, triethanolamine, cyclic ether, ethylene diamine, n-glyme, hexaphosphoric acid triamide, nitrobenzene derivative, sulfur, quinone imine dye, N-substituted oxazolidinone, N, N-substituted imidazolidine, ethylene glycol dialkyl ether, ammonium salt, pyrrole, 2-methoxy ethanol, or aluminum trichloride, etc. may be further included. Here, the additive may be included in an amount of 0.1 to 5wt% based on the total weight of the electrolyte.

As described above, since the lithium secondary battery including the positive electrode according to the present invention stably exhibits excellent discharge capacity, output characteristics, and capacity retention rate, it is useful in portable devices such as mobile phones, laptops, digital cameras, and electric vehicles such as hybrid electric vehicles (HEVs), etc.

Furthermore, the lithium secondary battery according to the present invention is not limited in appearance depending on the use of the battery, and its shape may be adopted by a case commonly used in the art. For example, the lithium secondary battery may be a battery including a cylindrical or a prismatic battery case using a can, or a pouch-type or a coin-type battery case.

As an example, the lithium secondary battery may be a prismatic secondary battery including a prismatic can as the battery case.

### [Mode for Carrying Out the invention]

Hereinafter, the present invention will be described in more detail by Examples and Experimental Examples.

However, the following Examples and Experimental Examples are merely illustrative of the present invention, and the contents of the present invention are not limited to the following examples.

### (Reference) Examples 1 to 7 and Comparative Examples 1 to 2. Preparation of positive electrode for lithium secondary battery

N-methylpyrrolidone solvent was injected into a homo mixer, and in order to form the first to third positive electrode mixture layers, LiNi_{0.8}Co_{0.1}Mn_{0.1}O₂ (hereinafter, 'NCM', average particle size: approx. 2µm) as a first positive electrode active material, LiFePO₄ (hereinafter, 'LFP') as a second positive electrode active material, carbon black as a conductor, and polyvinylidene fluoride (PVdF) as a binder were injected, respectively. Then, the mixture was mixed at 3,000rpm for 60 minutes to prepare a slurry for forming a first positive electrode mixture layer, a slurry for forming a second positive electrode mixture layer, and a slurry for forming a third positive electrode mixture layer, respectively.

Here, the slurry prepared to form each positive electrode mixture layer was prepared to include 48.5 parts by weight of the positive electrode active material, 1 part by weight of the conductor, and 0.5 part by weight of the binder based on solid content, and the content ratio (unit: parts by weight) of the first positive electrode active material and the second positive electrode active material included in each slurry and the average particle size (unit:µm) of the second positive electrode active material were adjusted as shown in Table 1.

A positive electrode was prepared by preparing an aluminum thin sheet (average thickness: 12µm) as a positive electrode current collector, sequentially casting the prepared slurry for forming the first to third positive electrode mixture layers on the prepared aluminum thin sheet, drying in a vacuum oven at 130°C, and rolling it. Here, the total thickness of the rolled positive electrode mixture layer was 150µm, and the thickness of each individual positive electrode mixture layer was 50µm in the case of a three-layer structure and 75µm in the case of a two-layer structure.

**[Table 1]**

| | Mixture layer structure | First positive electrode mixture layer | | | Second positive electrode mixture layer | | | Third positive electrode mixture layer | | |
|---|---|---|---|---|---|---|---|---|---|---|
| | | NCM content | LFP content | LFP particle size | NCM content | LFP content | LFP particle size | NCM content | LFP content | LFP particle size |
| Reference Example 1 | 2-layer | 75 | - | - | 67.5 | 7.5 | 1.5 | - | - | - |
| Example 2 | 3-layer | 50 | - | - | 49.5 | 0.5 | 0.8 | 49 | 1 | 1.5 |
| Example 3 | 3-layer | 50 | - | - | 47.5 | 2.5 | 0.8 | 45 | 5 | 1.5 |
| Example 4 | 3-layer | 50 | - | - | 45.5 | 4.5 | 0.8 | 41 | 9 | 1.5 |
| Example 5 | 3-layer | 50 | - | - | 42.5 | 7.5 | 0.8 | 35 | 15 | 1.5 |
| Example 6 | 3-layer | 50 | - | - | 47.5 | 2.5 | 1.5 | 45 | 5 | 1.5 |
| Reference Example 7 | 3-layer | 50 | - | - | 46.25 | 3.75 | 0.8 | 46.25 | 3.75 | 1.5 |
| Comparative Example 1 | 1-layer | 150 | - | - | - | - | - | - | - | - |
| Comparative Example 2 | 1-layer | - | 150 | 1.5 | - | - | - | - | - | - |

### (Reference) Examples 8 to 14 and Comparative Examples 3 to 4. Preparation of electrode assembly and lithium secondary battery

A negative electrode slurry was formed by preparing a negative electrode active material in which natural graphite and artificial graphite were mixed in a weight ratio of 1:1, and mixing 97 parts by weight of the negative electrode active material and 3 parts by weight of styrene-butadiene rubber (SBR) with water, and then it was casted on a copper thin sheet, which was a negative electrode current collector. A negative electrode was prepared by drying and rolling the copper thin sheet on which the negative electrode slurry was cast in a vacuum oven at 130°C. Here, the thickness of the negative electrode mixture layer was 130µm.

As shown in Table 2 below, the prepared negative electrodes were disposed opposite to the positive electrodes prepared in (Reference) Examples and Comparative Examples, respectively, and a separator made of 18µm polypropylene was interposed therebetween to prepare an electrode assembly. A prismatic lithium secondary battery was prepared by inserting each of the prepared electrode assemblies into a prismatic battery case, injecting an electrolyte composition into the battery case, and sealing the case. Here, as the electrolyte composition, a solution in which lithium hexafluorophosphate (LiPF₆, 1.0M) and vinyl carbonate (VC, 2wt%) were mixed into a mixture of ethylene carbonate (EC): dimethyl carbonate (DMC): diethyl carbonate (DEC)=1:1:1 (volume ratio) was used.

**[Table 2]**

| | Type of positive electrode used |
|---|---|
| Reference Example 8 | Positive electrode prepared in Example 1 |
| Example 9 | Positive electrode prepared in Example 2 |
| Example 10 | Positive electrode prepared in Example 3 |
| Example 11 | Positive electrode prepared in Example 4 |
| Example 12 | Positive electrode prepared in Example 5 |
| Example 13 | Positive electrode prepared in Example 6 |
| Reference Example 14 | Positive electrode prepared in Example 7 |
| Comparative Example 3 | Positive electrode prepared in Comparative Example 1 |
| Comparative Example 4 | Positive electrode prepared in Comparative Example 2 |

### Experimental Example

In order to evaluate the effect of the positive electrode for a lithium secondary battery according to the present invention, the following experiments were performed.

### A) Evaluation of secondary battery output

The lithium secondary batteries prepared in (Reference) Examples and Comparative Examples were fully charged at room temperature (22°C) at a 0.1C-rate. Then, the initial discharge capacity was measured while discharging the fully charged lithium secondary batteries at 0.1C-rate. After that, each lithium secondary battery was fully charged again at 0.1C-rate, and while discharging at 1.0C, 2.0C, 5.0C, and 9.0C-rates, respectively, the relative discharge capacity ratio based on the initial discharge capacity for each discharge rate was calculated, and the results were shown in Table 3 below.

### B) Evaluation of battery heat generation during charging and discharging

Overcharging was performed on the secondary batteries prepared in (Reference) Examples and Comparative Examples, and the surface temperature and the internal temperature of the overcharged secondary batteries were measured. Specifically, a heat sensor was installed inside the case of each of the target secondary batteries, and after charging at 4.2V, the charged battery was overcharged with a constant current of 1A until it reached 10V. Then, a constant voltage of 10V was maintained for 6 hours. After 6 hours had passed, the internal temperature of the battery was measured with the heat sensor installed in each secondary battery, the temperature of the secondary battery was measured three times by photographing the surface of each of the secondary batteries with a thermal imaging camera, and the average value was calculated and measured as the surface temperature of the battery during overcharging. The measured results were shown in Table 3 below.

### C) Evaluation of nail penetration test

For the lithium secondary batteries prepared in (Reference) Examples and Comparative Examples, charging and discharging cycles at a current value of 0.5C were repeated twice in a voltage range of 4.2V to 2.0V in an environment of 25°C. Then, after charging each of the lithium secondary batteries to 4.2V, whether ignition occurred was evaluated when a metal body with a diameter of 3mm was dropped at a rate of 80mm/sec to penetrate the cell in the same way as the PV8450 certification conditions, and the results were shown in Table 4.

### D) Evaluation of impact test

The lithium secondary batteries prepared in (Reference) Examples and Comparative Examples were fully charged at 0.1C-rate at room temperature (22°C). Then, a secondary battery impact test according to the UN1642DL impact certification standard was performed on the fully charged lithium secondary batteries. Here, the weight of the weight used was 9kg, and the experiment was performed by dropping it on a round bar placed in a secondary battery cell having a diameter of 16mm. The results were shown in Table 4 below.

**[Table 3]**

| | Ratio of relative discharge capacity to C rate discharge capacity [%] | | | |
|---|---|---|---|---|
| | 1.0C | 2.0C | 5.0C | 9.0C |
| Reference Example 8 | 99.2 | 98.5 | 91.3 | 81.8 |
| Example 9 | 99.7 | 99.0 | 92.6 | 84.7 |
| Example 10 | 99.5 | 98.7 | 91.7 | 82.7 |
| Example 11 | 99.3 | 98.4 | 90.5 | 81.2 |
| Example 12 | 99.1 | 97.5 | 88.3 | 79.9 |
| Example 13 | 99.1 | 98.3 | 90.7 | 82.0 |
| Reference Example 14 | 99.0 | 98.4 | 91.2 | 82.1 |
| Comparative Example 3 | 99.9 | 99.0 | 93.2 | 86.5 |
| Comparative Example 4 | 99.1 | 96.3 | 87.7 | 67.9 |

**[Table 4]**

| | Battery temperature when overcharged | | Whether ignition occurred during nail penetration (Pass/Test) | Impact test | |
|---|---|---|---|---|---|
| | Inside | Surface | | Average pressing | Whether ignition |
| | | | | width of round bar | occurred |
| Reference Example 8 | 46±1°C | 37±1°C | 6P/6T | 6.7 mm | X |
| Example 9 | 53±1°C | 42±1°C | 6P/6T | 6.9 mm | X |
| Example 10 | 44±1°C | 36±1°C | 6P/6T | 5.9 mm | X |
| Example 11 | 43±1°C | 35±1°C | 6P/6T | 5.8 mm | X |
| Example 12 | 42±1°C | 34±1°C | 6P/6T | 5.5 mm | X |
| Example 13 | 46±1°C | 37±1°C | 6P/6T | 6.9 mm | X |
| Reference Example 14 | 48±1°C | 38±1°C | 6P/6T | 6.5 mm | X |
| Comparative Example 3 | 63±1°C | 54±1°C | 1P/6T | 16.5 mm | O |
| Comparative Example 4 | 41±1°C | 32±1°C | 6P/6T | 5.1 mm | X |

As shown in Table 3 and Table 4, it can be seen that the positive electrode for a lithium secondary battery according to the present invention not only has a high energy density, but also has an excellent effect of improving the safety of the battery.

Specifically, it was shown that the secondary batteries of Examples according to the present invention maintained a discharge capacity ratio of 88% or more even at a high-rate discharge of 5.0C rate or higher. This means that the output of the lithium secondary battery including the positive electrode of the Examples is excellent.

In addition, the positive electrode of the Examples showed low internal and external temperatures of less than 54°C and less than 43°C respectively, during overcharging, and it was confirmed that ignition did not occur during the nail penetration test and the impact test. This means that the safety of the battery is high.

From these results, it can be seen that the positive electrode according to the present invention not only has an excellent energy density by containing a ternary compound containing nickel (Ni), cobalt (Co), manganese (Mn), etc., but also can improve safety due to internal short circuit of the secondary battery by containing an iron phosphate compound on the outermost part with respect to the positive electrode current collector.

### [Reference Numerals]

1: POSITIVE ELECTRODE FOR LITHIUM SECONDARY BATTERY
10: POSITIVE ELECTRODE CURRENT COLLECTOR
20: MULTI-LAYERED POSITIVE ELECTRODE MIXTURE LAYER
21: INDIVIDUAL POSITIVE ELECTRODE MIXTURE LAYER
21a: FIRST POSITIVE ELECTRODE MIXTURE LAYER
21b: N^{TH} POSITIVE ELECTRODE MIXTURE LAYER

## Claims

1. A positive electrode for a lithium secondary battery, the positive electrode comprising:
a positive electrode current collector; and
n positive electrode mixture layers disposed on the positive electrode current collector, where n>2,
wherein a first positive electrode mixture layer contacting a surface of the positive electrode current collector contains a first positive electrode active material comprising a lithium composite metal oxide represented by Formula 1 below, and
wherein a second positive electrode mixture layer to an n^{th} positive electrode mixture layer disposed on the first positive electrode mixture layer contains the first positive electrode active material containing the lithium composite metal oxide represented by Formula 1 and a second positive electrode active material containing an iron phosphate compound including LiFePO₄, LiFe_{0.8}Mn_{0.2}PO₄ or LiFe_{0.5}Mn_{0.5}PO₄:
[Formula 1] Liₓ[Ni_{y}Co_{z}Mn_{w}M¹ᵥ]O₂
In the above Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, 0≤v≤0.1, respectively, where y+z+w+v=1,
**characterized in that** a concentration of the second positive electrode active material increases from the second positive electrode mixture layer to the n^{th} positive electrode mixture layer.

2. The positive electrode for a lithium secondary battery of claim 1, wherein the second positive electrode active material is included in an amount of less than 10wt% based on a total weight of the positive electrode mixture layer.

3. The positive electrode for a lithium secondary battery of claim 1, wherein the second positive electrode active material is included in each of the second to n^{th} positive electrode mixture layers in an amount of 0.5 to 20wt% based on the weight of each of the second to n^{th} positive electrode mixture layer.

4. The positive electrode for a lithium secondary battery of claim 1, wherein an average particle size of the second positive electrode active material contained in each of the second to n^{th} positive electrode mixture layers increases from the second positive electrode mixture layer to the n^{th} positive electrode mixture layer.

5. The positive electrode for a lithium secondary battery of claim 1, wherein a total thickness of the n positive electrode mixture layers is 50µm to 200µm.

6. The positive electrode for a lithium secondary battery of claim 1, wherein a thickness of the first positive electrode mixture layer is 10% to 60% of the total thickness of the n positive electrode mixture layers.

7. An electrode assembly for a lithium secondary battery, the electrode assembly comprising:
the positive electrode according to claim 1;
a negative electrode; and
a separator interposed between the positive electrode and the negative electrode.

8. The electrode assembly for a lithium secondary battery of claim 7, wherein the negative electrode comprises a negative electrode current collector, and a negative electrode mixture layer disposed on the negative electrode current collector, and
wherein the negative electrode mixture layer comprises one or more carbon-based negative electrode active materials of natural graphite, artificial graphite, expanded graphite, hard carbon, soft carbon, carbon fiber, carbon black, carbon nanotube, fullerene, activated carbon, acetylene black, or ketjen black.

9. A lithium secondary battery, comprising:
the electrode assembly according to claim 7;
a battery case into which the electrode assembly is inserted; and
an electrolyte composition injected into a battery case together with an electrode assembly.

10. The lithium secondary battery of claim 9, wherein the lithium secondary battery is **characterized in that** it is a prismatic secondary battery.

## Patentansprüche

1. Positive Elektrode für eine Lithium-Sekundärbatterie, wobei die positive Elektrode umfasst:
einen Stromabnehmer der positiven Elektrode; und
n Mischschichten der positiven Elektrode, die auf dem Stromabnehmer der positiven Elektrode angeordnet sind, wobei n>2,
wobei eine erste Mischschicht der positiven Elektrode, die eine Oberfläche des Stromabnehmers der positiven Elektrode berührt, ein erstes aktives Material der positiven Elektrode enthält, das ein Lithium-Verbundmetalloxid umfasst, das durch Formel 1 unten dargestellt ist, und
wobei eine zweite Mischschicht der positiven Elektrode bis zu einer n-ten Mischschicht der positiven Elektrode, die auf der ersten Mischschicht der positiven Elektrode angeordnet ist, das erste aktive Material der positiven Elektrode, das das Lithium-Verbundmetalloxid enthält, das durch Formel 1 dargestellt ist, und ein zweites aktives Material der positiven Elektrode enthält, das eine Eisenphosphatverbindung enthält, die LiFePO₄, LiFe_{0,8}Mn_{0,2}PO₄ oder LiFe_{0,5}Mn_{0,5}PO₄ enthält:
[Formel 1] Liₓ[Ni_{y}Co_{z}Mn_{w}M¹ᵥ]O₂
wobei in der obigen Formel 1
M¹ ein oder mehrere Elemente ist, die aus der Gruppe ausgewählt sind, die aus W, Cu, Fe, V, Cr, Ti, Zr, Zn, Al, In, Ta, Y, La, Sr, Ga, Sc, Gd, Sm, Ca, Ce, Nb, Mg, B und Mo besteht,
x, y, z, w und v jeweils 1,0≤x≤1,30, 0,1≤y<1, 0≤z≤1, 0≤w≤1, 0≤v≤0,1 sind, wobei y+z+w+v=1,
**dadurch gekennzeichnet, dass** eine Konzentration des zweiten aktiven Materials der positiven Elektrode von der zweiten Mischschicht der positiven Elektrode zu der n-ten Mischschicht der positiven Elektrode zunimmt.

2. Positive Elektrode für eine Lithium-Sekundärbatterie nach Anspruch 1, wobei das zweite aktive Material der positiven Elektrode in einer Menge von weniger als 10 Gew.-%, bezogen auf ein Gesamtgewicht der Mischschicht der positiven Elektrode, enthalten ist.

3. Positive Elektrode für eine Lithium-Sekundärbatterie nach Anspruch 1, wobei das zweite aktive Material der positiven Elektrode in jeder der zweiten bis n-ten Mischschichten der positiven Elektrode in einer Menge von 0,5 bis 20 Gew.-%, bezogen auf das Gewicht jeder der zweiten bis n-ten Mischschichten der positiven Elektrode, enthalten ist.

4. Positive Elektrode für eine Lithium-Sekundärbatterie nach Anspruch 1, wobei eine durchschnittliche Teilchengröße des zweiten aktiven Materials der positiven Elektrode, das in jeder der zweiten bis n-ten Mischschichten der positiven Elektrode enthalten ist, von der zweiten Mischschicht der positiven Elektrode zu der n-ten Mischschicht der positiven Elektrode zunimmt.

5. Positive Elektrode für eine Lithium-Sekundärbatterie nach Anspruch 1, wobei eine Gesamtdicke der n Mischschichten der positiven Elektrode 50 µm bis 200 µm beträgt.

6. Positive Elektrode für eine Lithium-Sekundärbatterie nach Anspruch 1, wobei eine Dicke der ersten Mischschicht der positiven Elektrode 10 % bis 60 % der Gesamtdicke der n Mischschichten der positiven Elektrode beträgt.

7. Elektrodenanordnung für eine Lithium-Sekundärbatterie, wobei die Elektrodenanordnung umfasst:
die positive Elektrode nach Anspruch 1;
eine negative Elektrode; und
einen Separator, der zwischen der positiven Elektrode und der negativen Elektrode angeordnet ist.

8. Elektrodenanordnung für eine Lithium-Sekundärbatterie nach Anspruch 7, wobei die negative Elektrode einen Stromabnehmer der negativen Elektrode und eine Mischschicht der negativen Elektrode umfasst, die auf dem Stromabnehmer der negativen Elektrode angeordnet ist, und
wobei die Mischschicht der negativen Elektrode ein oder mehrere aktive Materialien der negativen Elektrode auf Kohlenstoffbasis aus natürlichem Graphit, künstlichem Graphit, expandiertem Graphit, hartem Kohlenstoff, weichem Kohlenstoff, Kohlenstofffaser, Ruß, Kohlenstoff-Nanoröhrchen, Fulleren, Aktivkohle, Acetylenruß oder Ketjenruß umfasst.

9. Lithium-Sekundärbatterie, umfassend:
die Elektrodenanordnung nach Anspruch 7;
ein Batteriegehäuse, in das die Elektrodenanordnung eingesetzt ist; und
eine Elektrolytzusammensetzung, die zusammen mit einer Elektrodenanordnung in ein Batteriegehäuse injiziert wird.

10. Lithium-Sekundärbatterie nach Anspruch 9, wobei die Lithium-Sekundärbatterie **dadurch gekennzeichnet ist, dass** sie eine prismatische Sekundärbatterie ist.

## Revendications

1. Électrode positive pour une batterie secondaire au lithium, l'électrode positive comportant :
un collecteur de courant d'électrode positive ; et
n couches de mélange pour électrode positive disposées sur le collecteur de courant d'électrode positive, où n>2,
dans laquelle une première couche de mélange pour électrode positive en contact avec une surface du collecteur de courant d'électrode positive contient un premier matériau actif pour électrode positive comportant un oxyde de métal composite de lithium représenté par la Formule 1 ci-dessous, et
dans laquelle une deuxième couche de mélange pour électrode positive à une n^{ième} couche de mélange pour électrode positive disposée sur la première couche de mélange pour électrode positive contient le premier matériau actif pour électrode positive contenant l'oxyde de métal composite de lithium représenté par la Formule 1 et un deuxième matériau actif pour électrode positive contenant un composé de phosphate de fer comprenant les matériaux LiFePO₄, LiFe_{0,8}Mn_{0,2}PO₄ ou LiFe_{0,5}Mn_{0,5}PO₄ :
[Formule 1] Liₓ[Ni_{y}Co_{z}Mn_{w}M¹ᵥ]O₂
Dans la formule 1 ci-dessus,
M¹ est un ou plusieurs éléments sélectionnés dans le groupe constitué par W, Cu, Fe, V, Cr, Ti, Zr, Zn, Al, In, Ta, Y, La, Sr, Ga, Sc, Gd, Sm, Ca, Ce, Nb, Mg, B, et Mo,
x, y, z, w et v sont 1,0≤x≤1,30, 0,1≤y<1, 0≤z≤1, 0≤w≤1, 0≤v≤0,1, respectivement, où y+z+w+v=1,
**caractérisée en ce qu'**une concentration du deuxième matériau actif pour électrode positive augmente de la deuxième couche de mélange pour électrode positive à la n^{ième} couche de mélange pour électrode positive.

2. Électrode positive pour une batterie secondaire au lithium selon la revendication 1, dans laquelle le deuxième matériau actif pour électrode positive est inclus en une quantité inférieure à 10 % en poids sur la base du poids total de la couche de mélange pour électrode positive.

3. Électrode positive pour une batterie secondaire au lithium selon la revendication 1, dans laquelle le deuxième matériau actif pour électrode positive est inclus dans chacune des deuxième à n^{ième} couches de mélange pour électrode positive en une quantité allant de 0,5 à 20 % en poids sur la base du poids de chacune des deuxième à n^{ième} couches de mélange pour électrode positive.

4. Électrode positive pour une batterie secondaire au lithium selon la revendication 1, dans laquelle une taille moyenne de particules du deuxième matériau actif pour électrode positive contenu dans chacune des deuxième à n^{ième} couches de mélange pour électrode positive augmente de la deuxième couche de mélange pour électrode positive à la n^{ième} couche de mélange pour électrode positive.

5. Électrode positive pour une batterie secondaire au lithium selon la revendication 1, dans laquelle une épaisseur totale des n couches de mélange pour électrode positive va de 50 µm à 200 µm.

6. Électrode positive pour une batterie secondaire au lithium selon la revendication 1, dans laquelle une épaisseur de la première couche de mélange pour électrode positive représente de 10 % à 60 % de l'épaisseur totale des n couches de mélange pour électrode positive.

7. Électrode positive pour une batterie secondaire au lithium, l'électrode positive comportant :
l'électrode positive selon la revendication 1 ;
une électrode négative ; et
un séparateur se trouvant entre l'électrode positive et l'électrode négative.

8. Ensemble d'électrodes pour une batterie secondaire au lithium selon la revendication 7, dans lequel l'électrode négative comporte un collecteur de courant d'électrode négative, et une couche de mélange pour électrode négative disposée sur le collecteur de courant d'électrode négative, et
dans lequel la couche de mélange pour électrode négative comporte un ou plusieurs matériaux actifs pour électrode négative à base de carbone parmi du graphite naturel, du graphite artificiel, du graphite expansé, du carbone dur, du carbone mou, de la fibre de carbone, du noir de carbone, du nanotube de carbone, du fullerène, du charbon actif, du noir d'acétylène ou du noir de Ketjen.

9. Batterie secondaire au lithium, comportant :
l'ensemble d'électrodes selon la revendication 7 ;
un boîtier de batterie dans lequel l'ensemble d'électrodes est inséré ; et
une composition électrolytique injectée dans un boîtier de batterie en même temps qu'un ensemble d'électrodes.

10. Batterie secondaire au lithium selon la revendication 9, dans laquelle la batterie secondaire au lithium est **caractérisée en ce qu'**il s'agit d'une batterie secondaire prismatique.
